Europäisches Patentamt

(19) European Patent Office

Office européen des brevets

(11) Numéro de publication: **0 138 636**
**B1**

(12) **FASCICULE DE BREVET EUROPEEN**

(45) Date de publication du fascicule du brevet:
01.06.88

(51) Int. Cl.⁴: **A 01 G 25/02**

(21) . Numéro de dépôt: **84401640.2**

(22) Date de dépôt: **07.08.84**

(54) **Dispositif pour l'irrigation goutte à goutte.**

(30) Priorité: **11.08.83 FR 8313210**

(43) Date de publication de la demande:
**24.04.85 Bulletin 85/17**

(45) Mention de la délivrance du brevet:
**01.06.88 Bulletin 88/22**

(84) Etats contractants désignés:
**DE GB IT NL**

(56) Documents cités:
**WO - A - 83/00003**
**FR - A - 2 281 719**
**FR - A - 2 314 382**
**FR - A - 2 366 790**
**FR - A - 2 469 959**

(73) Titulaire: **KULKER S.A. Société dite:, Route d'Orléans,
F-45600 Sully sur Loire (FR)**

(72) Inventeur: **Selingant, Jean-Louis, 3, rue des Médecins,
F-45600 Sully Sur Loire (FR)**

(74) Mandataire: **Armengaud Aîné, Alain, Cabinet
ARMENGAUD AINE 3 Avenue Bugeaud, F-75116 Paris
(FR)**

## Description

La présente invention est relative à un système goutte à goutte, encore appelé «goutteur», qui est utilisé dans le domaine de l'irrigation pour assurer une émission et une distribution goutte à goutte d'un liquide, généralement de l'eau, à un très faible débit d'écoulement.

Il existe à l'heure actuelle sur le marché un certain nombre de types de goutteurs qui se composent généralement d'un boîtier, muni d'un orifice de sortie central dans lequel vient s'encastrer un corps de forme annulaire dont les faces supérieure et inférieure comportent des rainures et des chicanes formant des circuits de perte de charge communiquant entre eux par un passage approprié, l'eau sous pression étant admise dans ce corps par un téton venant se placer sur une conduite principale. On comprend que les circuits de perte de charge ramènent la pression d'alimentation à un niveau d'émission voulu. Pour pallier les difficultés résultant des variations de la pression d'alimentation, ces dispositifs goutteurs connus comportent souvent une membrane souple et élastique interposée entre les chambres d'entrée et de sortie du dispositif, cette membrane agissant pour compenser les variations de la pression d'alimentation.

Ce type de goutteur est décrit notamment par le brevet FR-A-23 14 382, et il comporte une membrane cylindrique formant pièce mâle rigide, muni d'un premier circuit de perte de charge en chicane, un capuchon cylindrique formant pièce femelle rigide, venant s'encastrer sur l'embase et une membrane cylindrique plate interposée entre les deux circuits de perte de charge et muni d'un trou central pour permettre le passage de l'eau à distribuer goutte à goutte entre les deux circuits de perte de charge. On connaît également (FR-A-2 366 790) un dispositif d'irrigation goutte-à-goutte comportant un boîtier, un couvertcle, un organe circulaire percé d'une pluralité de trous constituant un circuit de perte de charges, disposé dans ledit boîtier et un organe régulateur, en forme de disque, positionné dans le boîtier, entre l'ajutage d'entrée de l'eau dans ce dernier et l'organe circulaire constituant le circuit de perte de charge.

Ces systèmes connus ne donnent pas toute satisfaction en raison de leur complexité et des défauts de fonctionnement de la membrane de régulation.

L'invention se propose d'apporter un système goutte-à-goutte perfectionné ne présentant pas les inconvénients ci-dessus.

A cet effet, l'invention apporte un dispositif pour l'irrigation au goutte-à-goutte qui comprend une embase cylindrique formant pièce mâle rigide, comportant un premier circuit de perte de charge à rainure axiale, un capuchon cylindrique formant pièce femelle rigide, venant s'encliqueter sur l'embase et qui comporte un second circuit de perte de charge similaire et une membrane sous forme d'une pièce cylindrique plate interposée entre les deux circuits de perte de charge pour les isoler l'un de l'autre sur leur plus grande partie, un passage permettant aux deux circuits de communiquer entre eux, caractérisé en ce que les deux circuits de perte de charge communiquent entre eux par des zones annulaires situées respectivement à la périphérie de chaque circuit, l'entrée ou la sortie de l'eau dans les deux circuits s'effectuant par leurs centres respectifs, et en ce que la membrane interposée entre les deux circuits de perte de charge est réalisée en un matériau souple et élastique, afin d'assurer l'étanchéité entre les deux circuits de perte de charge et l'auto-régulation par déformation et appui sur les zones annulaires non-périphériques des circuits de perte de charge de l'embase et du capuchon.

Selon une autre caractéristique de cette invention, dans la rainure de chaque circuit de perte de charge est ménagé un trajet en chicanes pour réduire la pression d'écoulement du liquide, le trajet en chicanes étant obtenu à l'aide d'une pluralité d'éléments radiaux en forme de bâtonnets, de triangles, de triangles curvilignes, faisant saillie dans ladite rainure.

D'autres caractéristiques et avantages de cette invention ressortiront de la description faite ci-après en référence aux dessins annexés, qui en illustrent divers exemples de réalisation dépourvus de tout caractère limitatif. Sur les dessins:

– La figure 1 est une vue en élévation en demi-coupe axiale longitudinale du système goutteur selon l'invention;

– La figure 2 est une vue en élévation et coupe longitudinale axiale de l'embase du système selon l'invention;

– La figure 3 est une vue en plan de la figure 2 montrant le circuit de perte de charge;

– la figure 4 est une vue en élévation et coupe axiale longitudinale du capuchon du système selon l'invention;

– la figure 5 est une vue en plan de la figure 4, montrant le circuit de perte de charge du capuchon; et,

– les figures 6 et 7 sont des vues partielles, en plan, illustrant des exemples de réalisation des chicanes des circuits de perte de charge du système goutte à goutte selon cette invention.

En se référant aux dessins, on voit que le système goutteur selon cette invention comporte trois parties principales: une embase, désignée dans son ensemble par la référence 10, un capuchon, désigné dans son ensemble par la référence 12, et une membrane 14 interposée entre ces deux éléments.

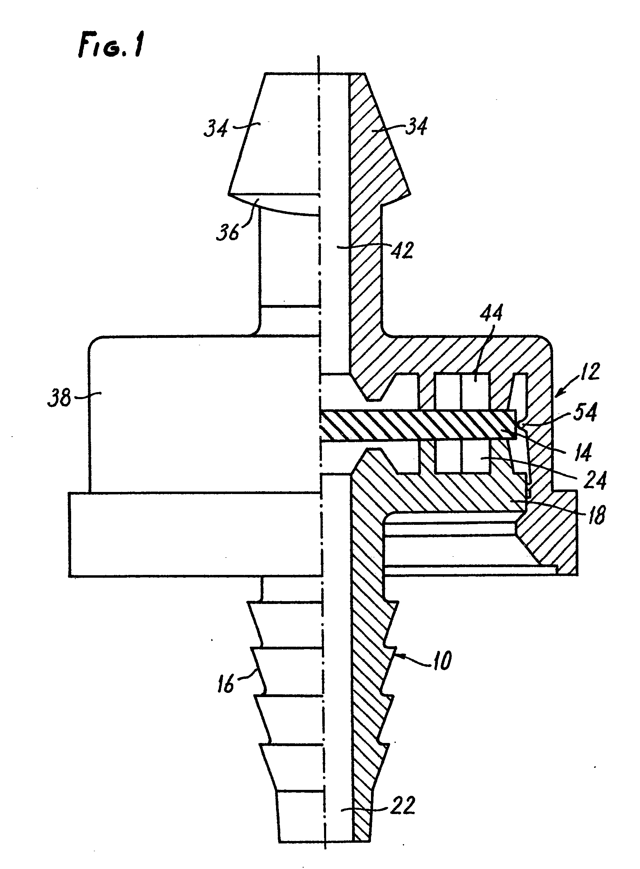

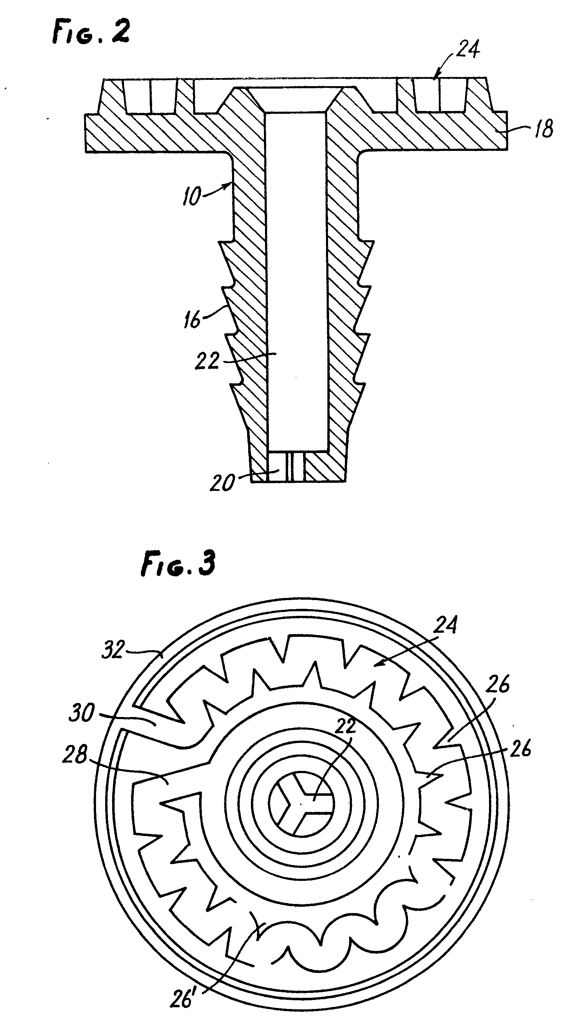

L'embase 10 (figures 2 et 3) est constituée par une pièce mâle rigide comportant extérieurement une forme tronconique 16, pourvue de cannelures pour l'insertion et le maintien du système dans un tube d'alimentation en liquide sous pression, une forme cylindrique 18, constituant la zone de contact avec l'alésage interne du capuchon et assurant l'étanchéité sur la partie correspondante du capuchon (voir la figure 1), après encliquetage du capuchon 12 sur l'embase. Cette embase 10 présente une forme intérieure creuse, constituée d'un orifice d'admission en étoile 20, débouchant sur un alésage cylindrique axial 22 qui communique avec le circuit de perte de charge de l'embase, désigné dans son ensemble par la référence 24. Ce circuit de perte de charge est constitué par une rainure annulaire dans

laquelle sont disposés une pluralité d'éléments radiaux 26, ménageant un trajet en chicanes pour l'eau à distribuer, celle-ci pénétrant par l'alésage central 22 pour entrer dans le circuit 24 par une ouverture 28, et ressortir de ce circuit par une ouverture 30, débouchant sur la périphérie 32 de l'embase avant de pénétrer dans le circuit de perte de charge du capuchonn 12, comme on le verra ci-après. Bien entendu, les ouvertures latérales 28 et 30 peuvent servir indifféremment d'entrée ou de sortie du liquide, suivant le sens d'utilisation.

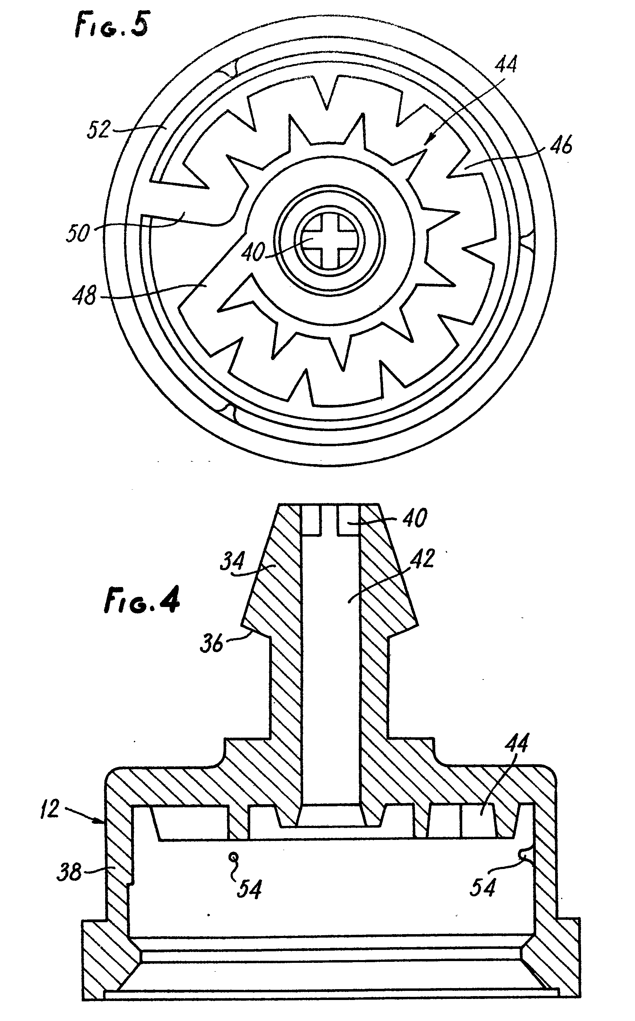

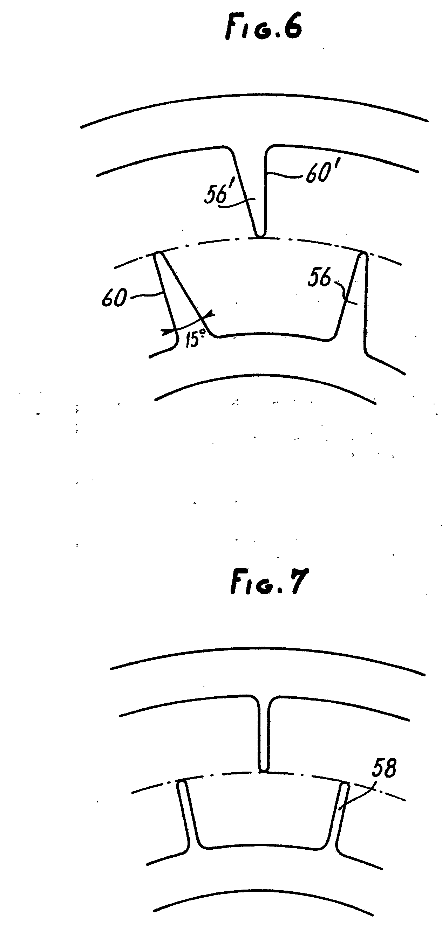

Le capuchon 12 (figures 4 et 5) est réalisé sous la forme d'une pièce femelle rigide qui comporte extérieurement: un embout présentant une extrémité de forme tronconique 34, pour l'introduction dans le tube d'alimentation, et une portée sphérique 36, conçue de façon à assurer une bonne surface de contact sur le tube d'alimentation, ainsi que l'étanchéité, et qui facilite en outre la dépose et le remplacement éventuels sans endommager le tube d'alimentation, et une partie cylindrique 38 dans laquelle vient s'encliqueter l'embase. Le capuchon 12 présente une forme intérieure creuse, constituée d'un orifice d'admission (ou d'évacuation, selon le sens de l'utilisation du système) en étoile 40, débouchant sur un alésage cylindrique axial 42 qui communique avec le circuit de perte de charge du capuchon, désigné dans son ensemble par la référence 44. Ce circuit 44 est constitué par une rainure annulaire dans laquelle sont disposés une pluralité d'éléments radiaux 46, ménageant un trajet en chicanes pour l'eau à distribuer, celle-ci passant par l'alésage central 42, puis dans le circuit 44, par une ouverture 48, et enfin par une ouverture 50 qui débouche sur la périphérie 52, communiquant avec la zone périphérique correspondante 32 de l'embase. L'alésage interne du capuchon est pourvu de parties en saillie qui constituent des plots 54 (on a prévu, dans cet exemple de réalisation non limitatif, trois plots 54, décalés de 120°), assurant l'auto-centrage de la membrane 14 interposée (figure 1) entre le capuchon 12 et l'embase 10, sans gêner le passage de l'eau jusqu'aux entrées latérales 30, 50 des circuits de perte de charge.

Comme on l'a précisé précédemment, la membrane 14 est réalisée sous la forme d'une pièce cylindrique plate souple. La membrane étant du type souple, par exemple en caoutchouc ou en matière plastique, elle assure à la fois l'étanchéité entre les deux circuits de perte de charge et l'auto-régulation (pour compenser les variations de la pression d'alimentation de l'eau), par déformation et contact sur les zones annulaires périphériques du capuchon et de l'embase.

Sur la figure 3, le circuit de perte de charge 24 de l'embase comporte des éléments triangulaires 26, ou, en variante, des éléments 26' en forme de triangles curvilignes, qui comportent des points concaves qui convergent vers un axe central commun. Cette forme permet d'obtenir un auto-nettoyage.

Les figures 6 et 7 illustrent des variantes de réalisation des éléments constituant les chicanes des circuits de perte de charge. Sur la figure 6, les éléments 56, 56' sont des triangles d'angle au sommet de 15° et présentant un côté 60, 60' orienté selon un rayon. Sur la figure 7, les éléments 58 constituent des bâtonnets radiaux.

Le fonctionnement de ce dispositiv est identique à celui des systèmes goutteurs selon la technique antérieure.

En supposant que le système est branché en dérivation sur un tube par l'embout 34, introduit dans un trou prévu dans le tube d'alimentation en eau sous pression, l'admission d'eau sous pression s'effectue par l'alésage interne 42 du capuchon. L'eau sous pression pénètre ainsi dans le circuit de perte de charge 44 du capuchon, où l'on réalise une première réduction de pression, l'eau pénétrant dans ce circuit par l'ouverture 48, pour en ressortir par l'ouverture 50. L'eau passe ensuite dans le circuit de perte de charge 24 de l'embase par la périphérie du système. Elle pénètre dans le circuit 24 par l'ouverture 30, subit une nouvelle réduction de pression dans le circuit 24, et elle ressort par l'ouverture 28, qui débouche sur l'alésage 22 de l'embase 10, et on obtient une émission goutte à goutte à la sortie 20 du système.

Bien entendu, le système selon l'invention peut fonctionner dans les deux sens. En effet, il peut être utilisé et alimenté:

– du côté embase, par introduction à l'extrémité d'un tube d'alimentation;

– du côté capuchon, comme décrit ci-dessus, par piquage en dérivation sur un tube.

L'auto-régulation est assurée par la membrane, dans les deux sens de circulation de l'eau, dans le goutteur.

L'embase 10 et le capuchon 12 peuvent être réalisés par injection, en polypropylène ou autre matière plastique, à l'aide d'un moule unique à empreintes multiples. On réalise ainsi un ensemble «grappe» injecté qui se présente sous la forme d'une chaîne plate centrale, comportant un nombre égal d'embases et de capuchons, répartis de chaque côté. La grappe se déplace, entre chaque cycle, dans le moule ouvert, en entraînant les pièces, sans sortir totalement, afin d'assurer par autosoudure une continuité avec l'injection suivante. Cette technique permet le transport et le positionnement au poste d'assemblage automatique, à la sortie de la presse à injection. La membrane 14 est obtenue par poinçonnage-découpage dans une plaque d'un matériau souple, et elle est mise en place dans le capuchon directement à l'assemblage, avant l'encliquetage du capuchon sur l'embase.

Le goutteur ainsi conçu est démontable à l'aide d'une pince appropriée, afin de subir les opérations de nettoyage. Les trois composants sont ensuite assemblés à nouveau à l'aide de la même pince, tout en conservant au goutteur ses caractéristiques hydrauliques initiales.

Le dispositif goutteur selon cette invention peut être utilisé pour l'irrigation des cultures industrielles, pour les arboriculteurs, les horticulteurs, les viticulteurs, les maraîchers, etc., ou des cultures domestiques ou particulières, pour les jardiniers, les particuliers, etc.

## Revendications

1. Dispositif pour l'irrigation au goutte-à-goutte qui comprend une embase cylindrique (10) formant pièce mâle rigide, comportant un premier circuit de perte de charge (24) à rainure axiale, un capuchon cylindrique (12) formant pièce femelle rigide, venant s'encliqueter sur l'embase et qui comporte un second circuit de perte de charge similaire (44) et une membrane (14) sous forme d'une pièce cylindrique plate interposée entre les deux circuit de perte de charge pour les isoler l'un de l'autre sur leur plus grande partie, un passage permettant aux deux circuits de communiquer entre eux, caractérisé en ce que les deux circuits de perte de charge (24, 44) communiquent entre eux par des zones annulaires (32, 52) situées respectivement à la périphérie de chaque circuit, l'entrée ou la sortie de l'eau dans les deux circuits s'effectuant par leurs centres (22, 42) respectifs, et en ce que la membrane (14) interposée entre les deux circuits de perte de charge est réalisée en un matériau souple et élastique, afin d'assurer l'étanchéité entre les deux circuits de perte de charge et l'autorégulation par déformation et appui sur les zones annulaires non-périphériques des circuits de perte de charge (24, 44) de l'embase (10) et du capuchon (12).

2. Dispositif selon la revendication 1, caractérisé en ce que dans la rainure de chaque circuit de perte de charge est ménagé un trajet en chicanes pour réduire la pression d'écoulement du liquide, le trajet en chicanes étant obtenu à l'aide d'une pluralité d'éléments faisant saillie dans ladite rainure.

3. Dispositif selon la revendication 2, caractérisé en ce que lesdits éléments prévus dans les circuits de perte de charge sont constitués par des triangles (26) dont les angles au sommet convergent vers un même axe central.

4. Dispositif selon la revendication 2, caractérisé en ce que lesdits éléments des circuits de perte de charge sont constitués par des triangles curvilignes (26') c'est-à-dire à côtés curvilignes.

5. Dispositif selon la revendication 2, caractérisé en ce que les éléments des circuits de perte de charge sont des triangles (56, 56') d'angle au sommet égal à 15° et qui comportent un côté (60, 60') orienté selon un rayon.

6. Dispositif selon la revendication 2, caractérisé en ce que les éléments des circuits de perte de charge sont constitués par des bâtonnets radiaux (58).

7. Dispositif selon l'une quelconque des revendications précédentes caractérisé en ce que l'alésage interne du capuchon est pourvu de parties en saillie en forme de plots (54), qui assurent l'auto-centrage de la membrane (14).

## Patentansprüche

1. Tropfbewässerungsvorrichtung mit einer starren zylindrischen Grundplatte (10) als Patrize, die einen axialen Kanal (24) als ersten Druckminderkreis aufweist, einer starren zylindrischen Verschlußklappe (12) als Matrize, die auf der Grundplatte (10) einrastbar ist und mit einem zweiten gleichartigen Druckminderkreis (44) sowie einer flachen zylindrischen Membran (14) ausgestattet ist, die zur weitgehenden Trennung der beiden Druckminderkreise zwischen diesen angeordnet ist, wobei ein Durchlaß die Verbindung der beiden Kreise untereinander ermöglicht, dadurch gekennzeichnet, daß die beiden Druckminderkreise (24, 44) über die ringförmigen Bereiche (32, 52) miteinander verbunden sind, die jeweils an der Peripherie jedes Kreises angeordnet sind, der Ein- und Auslauf des Wassers in beiden Kreisen durch deren Zentren (22, 42) erfolgt, daß die zwischen den beiden Druckminderkreisen eingesetzte Membran (14) aus einem geschmeidigen und elastischen Material besteht, um die Abdichtung zwischen den beiden Druckminderkreisen, die Selbstregulierung aufgrund der Deformation und die Unterstützung der ringförmigen, nicht peripheren Bereiche der Druckminderkreise (24, 44) der Grundplatte (10) und der Verschlußklappe (12) sicherzustellen.

2. Vorrichtung nach Anspruch 1, dadurch gekennzeichnet, daß im Kanal jedes Druckminderkreises ein Durchlauf mit Hindernissen ausgespart ist, um den Strömungsdruck der Flüssigkeit zu reduzieren, wobei der Hindernisdurchlauf mit Hilfe einer Vielzahl von Elementen erhalten wird, die in den besagten Kanal hineinragen.

3. Vorrichtung nach Anspruch 2, dadurch gekennzeichnet, daß diese in den Druckminderkreisen vorgesehenen Elemente aus Dreiecken (26) gebildet werden, deren Scheitelwinkelhalbierende auf die gleiche zentrale Achse konvergieren.

4. Vorrichtung nach Anspruch 2, dadurch gekennzeichnet, daß diese Elemente in den Druckminderkreisen aus gekrümmten Dreiecken (26') gebildet werden, d. h. daß diese mit gekrümmten Rändern versehen sind.

5. Vorrichtung nach Anspruch 2, dadurch gekennzeichnet, daß die Elemente der Druckminderkreise Dreiecke (56, 56') mit Scheitelwinkeln von jeweils 15° sind, die einen radial ausgerichteten Rand (60, 60') aufweisen.

6. Vorrichtung nach Anspruch 2, dadurch gekennzeichnet, daß die Elemente der Druckminderkreise aus radialen Stäbchen (58) gebildet werden.

7. Vorrichtung nach einem der vorhergehenden Ansprüche, dadurch gekennzeichnet, daß die Bohrung im Inneren der Schutzkappe mit hervorstehenden Nasen (54) versehen ist, welche die Selbstzentrierung der Membran (14) sicherstellen.

## Claims

1. Drop irrigation device which comprises a cylindrical base (10) in the form of a rigid male element provided with a first pressure-drop circuit (24) comprising axial grooves, a cylindrical cap (12) in the form of a rigid female element, which comes into engagement over said base and which comprises a similar second pressure-drop circuit (44) and a membrane (14) in the form of a flat cylindrical part inserted between the two pressure-drop circuits in order to separate one from the other on their biggest portion, a passageway for enabling the two circuits to communicate with each other, characterized in that the two pressure-drop circuits (24, 44) communicate with each other through ring-shaped zones (32, 52) which are respectively located at the periphery of each circuit, the inflow or the outflow of the water in the two circuits taking place at their respective centers (22, 42) and in that the membrane (14) which is inserted between the two pressure-drop circuits consists of a flexible and resilient material so as to ensure the tightness between both pressure-drop circuits and the self-regulation by deformation and application on the non-peripheral ring-shaped zones of the pressure-drop circuits (24, 44) of the base (10) and the cap (12).

2. Device according to claim 1, characterized in that a staggered path with baffles is formed in the groove of each pressure-drop circuit, for reducing the flowing pressure of the liquid, said staggered path being obtained by means of a plurality of elements protruding in said groove.

3. Device according to claim 2, characterized in that said elements provided in the pressure-drop circuits consists of triangles (26), the apex angles of which are converging on a common central axis.

4. Device according to claim 2, characterized in that said elements provided in the pressure-drop circuits consist of curvilinear triangles (26′), i.e. provided with curvilinear sides.

5. Device according to claim 2, characterized in that the pressure-drop circuits elements consist of triangles (56, 56′) with an apex angle of 15° and a radially directed side (60, 60′).

6. Device according to claim 2, characterized in that the pressure-drop circuits elements consist of radial rods (58).

7. Device according to any of the preceding claims, characterized in that the internal bore of the cap is provided with projections in the form of studs (54) which ensure the self-centering of the membrane (14).

# Fig.1

FIG. 2

24

18

10

16

22

20

FIG. 3

32

30

28

24

26

22

26

26'

**Fɪɢ.5**

52

44

46

50

40

48

**Fɪɢ.4**

34

42

40

36

12

44

38

54      54

## Fig. 6

## Fig. 7